# EUROPEAN PATENT APPLICATION

(11) **EP 4 332 658 A1**
(43) Date of publication of application: **06.03.2024**
(21) Application number: 22816341.6
(22) Date of filing: 11.05.2022
(51) Int. Cl.: G02B 27/01

(54) **WEARABLE ELECTRONIC DEVICE AND METHOD FOR CONTROLLING POWER PATH THEREOF**

(30) Priority: 02.06.2021 KR 20210071732
(71) Applicant: Samsung Electronics Co., Ltd., Suwon-si, Gyeonggi-do 16677 (KR)
(72) Inventor: YOON, Jongmin, Suwon-si, Gyeonggi-do 16677 (KR); KIM, Chulkwi, Suwon-si, Gyeonggi-do 16677 (KR)
(74) Representative: Gulde & Partner
(86) International application number: PCT/KR2022/006755
(87) International publication number: WO 2022/255682

(57) **Abstract**

An embodiment of the present disclosure provides a wearable electronic device and a method for controlling a power path in the wearable electronic device. An electronic device according to various embodiments may comprise: a first support frame including a first system; a second support frame including a second system; a switch module for changing a configuration of a power path between the first system and the second system; and a processor provided in the first system and/or the second system and operatively connected to the switch module, wherein the processor is configured to change the configuration of the switch module so that the power path between the first system and the second system is connected to a power path of a first power source (VBUS) under a first specified condition of the electronic device, and change the configuration of the switch module so that the power path between the first system and the second system is connected to a power path of a second power source (VBAT) under a second specified condition of the electronic device.

## Description

### [Technical Field]

Various embodiments of the present disclosure relate to a wearable electronic device and a method of controlling a power path in the wearable electronic device.

### [Background Art]

Recently, research and development on extended reality (XR) technologies such as virtual reality (VR), augmented reality (AR), and/or mixed reality (MR) has been progressing. In recent years, VR, AR, and/or MR technologies have been variously used in various fields (e.g., entertainment, infotainment, smart home, and/or smart factory fields), and the hardware and/or software parts of an electronic device for this application are continuously being researched and developed.

For example, a wearable electronic device (e.g., AR glasses or smart glasses), or a head-mounted device (e.g., a head-mounted display, HMD), alone or in conjunction with at least two other devices, can provide a single image on a display by overlapping (or overlaying) various digital contents (e.g., virtual images) on the real world through an application related to an AR service.

One example of an electronic device that supports augmented reality services may be a glasses-type wearable electronic device (e.g., AR glasses). The glasses-type wearable electronic device is worn on a user's body (e.g., on a facial area) and can provide virtual content to the user in the real world.

### [Disclosure of Invention]

### [Technical Problem]

Meanwhile, in the glasses-type wearable electronic device, a power source (e.g., VBUS) path (or power line) for charging electronic components (e.g., a first system (or main system) and a second system (or sub system)) constituted in a housing (e.g., a glasses frame) separated into left and right sides, respectively, and a power source (e.g., VBAT) path for supplying a power source in the electronic components are respectively designed. For example, a structure in which a first path (e.g., a VBUS line) supplied from an external device (e.g., a charger) and a second path (e.g., a VBAT line) supplied to a first system and a second system are connected for power line connection of the first system of a first housing and the second system of a second housing in a wearable electronic device may be provided.

Therefore, while the glasses-type wearable electronic device requires miniaturization to be worn like a glasses, a third housing (e.g., a lens housing that encloses a display) connecting the first system and the second system has not been miniaturized and reduced in weight for connecting the respective power lines for the first path and the second path. For example, in case of the glasses-type wearable electronic device, there is a problem in that the VBUS line supplied from the charger and the VBAT line supplied to both systems need to be connected to connect the power lines of the first and second systems, and the wiring needs to be thickened due to a DCR difference according to lengths of both wires.

In various embodiments, there are provided a method and device for connecting and controlling the first system (e.g., main system) and the second system (e.g., sub system) with a single power line by constituting a switch between the first system (e.g., main system) and the second system (e.g., sub system) that are constituted in left and right housings (e.g., glasses frame) in an electronic device.

In various embodiments, there are provided a method and device that are capable of controlling a configuration of a switch to change a single power path connected to a first power source (e.g., VBUS) line and a second power source (e.g., VBAT) line based on a specified condition.

In various embodiments, there are provided a method and device that are capable of controlling an electronic device, by means of a switch structure, to use a power line as a power path of a first power source (e.g., VBUS) when the electronic device is in charging operation, and to use the power line as a power path of a second power source (e.g., VBAT) when the electronic device is in non-charging operation.

### [Solution to Problem]

An electronic device, according to an embodiment of the present disclosure, may include a first support frame including a first system (or a main system), a second support frame including a second system (or a sub system), a switch module configured to change a configuration of a power path between the first system and the second system, and a processor provided in the first system and/or the second system and operatively connected to the switch module, in which the processor may be configured to change the configuration of the switch module so that the power path between the first system and the second system is connected to a power path of a first power source (VBUS) under a first specified condition of the electronic device, and change the configuration of the switch module so that the power path between the first system and the second system is connected to a power path of a second power source (VBAT) under a second specified condition of the electronic device.

A wearable electronic device, according to an embodiment of the present disclosure, may include a first housing including a first system (e.g., a main system), a second housing constituted to be spaced apart from the first support frame, and including a second system (e.g., a sub system), a power path between the first system and the second system, a first switch and a second switch configured to change a configuration of the power path between the first system and the second system, and a processor, in which the processor may be configured to control the configuration of the first switch and the second switch to change the power path for a first power source (VBUS) or a second power source (VBAT) based on a specified condition, in which the first switch may be configured to be connected to a power path for the first power source (VBUS) applied from an external device and/or the second power source (VBAT) supplied from a first battery of the first system, and in which the first switch configured to connect either one power source of the first power source or the second power source to the second switch through the power path based on the specified condition, in which the second switch is configured to be connected to the first switch through the power path, and to connect the first power source or the second power source to the second system through the power path based on the specified condition.

A method of operating an electronic device, according to an embodiment of the present disclosure, may include monitoring a specified condition of the electronic device, changing a configuration of a switch module such that a power path between a first system and a second system is connected to a power path of a first power source (VBUS) under a first specified condition of the electronic device, and changing the configuration of the switch module so that the power path between the first system and the second system is connected to a power path of a second power source (VBAT) under a second specified condition of the electronic device.

In various embodiments of the present disclosure to solve the above described technical objects, a computer-readable recording medium in which a program for executing the method in a processor is recorded may be included.

An additional range of the applicability of the present disclosure will become apparent from the following detailed description. However, various alterations and modifications may be clearly understood by those skilled in the art without departing from the spirit and scope of the present disclosure. Accordingly, it should be understood that the detailed description and the specific embodiments such as the exemplary embodiments of the present disclosure are just provided for illustrative purposes.

### [Advantageous Effects of Invention]

According to a wearable electronic device and a method of operating the same, in accordance with embodiments of the present disclosure, a switch is constituted between a first system (e.g., a main system) and a second system (e.g., a sub system) that are constituted in a left and right housing (e.g., glasses frame) of the electronic device (e.g., an AR glass) so that a power line can be used as a VBUS path when the electronic device is charged and used as a VBAT (VSYS) path when the electronic device is not charged. Accordingly, in various embodiments, the power lines of an FPCB connecting the first system and the second system can be simplified to a single power line, thereby reducing the thickness of the FPCB due to each existing power line, securing space on the FPCB, and improving a DCR of the power line. According to various embodiments, an electronic device 101 can secure stability of a system without control (e.g., current control) of a second power source (e.g., VBAT) of the first system and the second system, thereby eliminating a limiter for the current control, and securing mounting space for other constituent elements and reducing the cost of the electronic device by eliminating the limiter.

In addition, various effects that can be directly or indirectly identified through the present document may be provided.

### [Brief Description of Drawings]

In connection with the description of the drawings, the same or similar reference numerals may be used for the same or similar components.
FIG. 1 is a block diagram illustrating an example electronic device in a network environment according to various embodiments.
FIG. 2 is a view illustrating an example of an electronic device according to various embodiments.
FIG. 3 is a view illustrating an example of an internal constitution of the electronic device according to various embodiments.
FIG. 4 is a view illustrating an example of a connection structure of a power path in the electronic device according to an embodiment.
FIG. 5 is a view illustrating an example of a connection structure of a power path in the electronic device according to various embodiments.
FIG. 6 is a view schematically illustrating a constitution of the electronic device according to various embodiments.
FIG. 7 is a flowchart illustrating a method of operating the electronic device according to various embodiments.
FIG. 8 is a view for describing an example of switching to connect a power path with a single power line in the electronic device according to various embodiments.
FIG. 9 is a view for describing another example of switching to connect a power path with a single power line in the electronic device according to various embodiments.
FIG. 10 is a flowchart illustrating a method of operating the electronic device according to various embodiments.

### [Mode for the Invention]

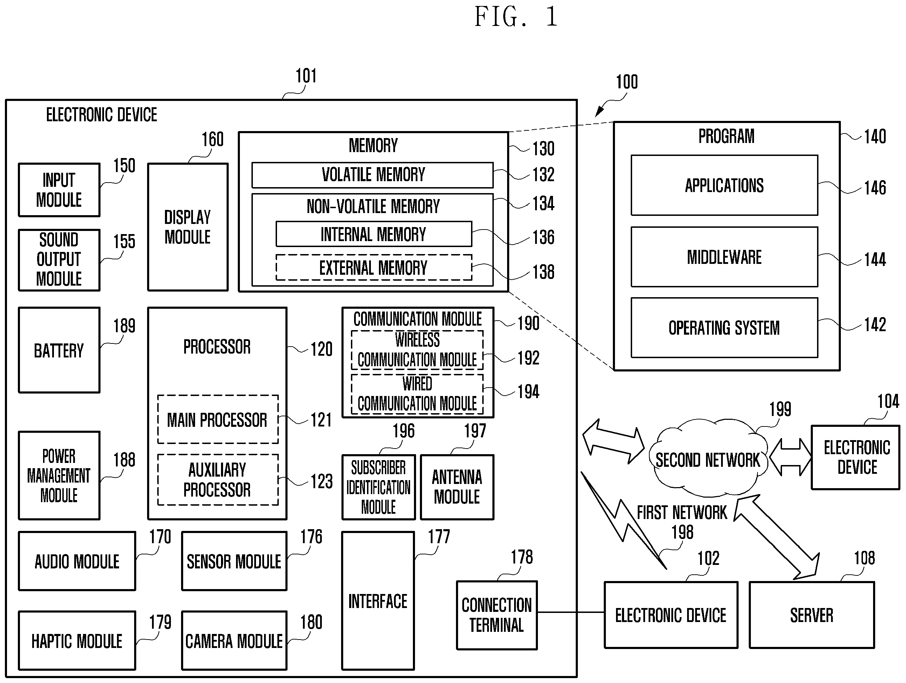

FIG 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

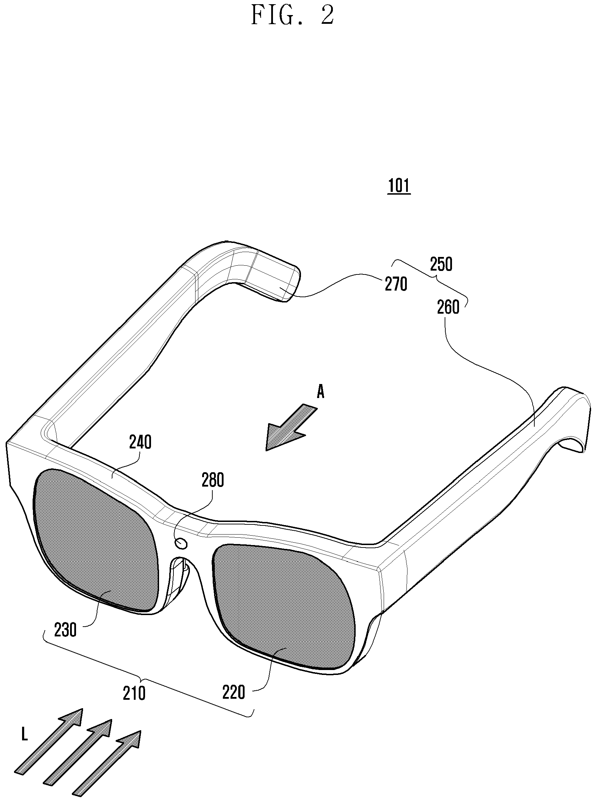

FIG. 2 is a view illustrating an example of an electronic device according to various embodiments.

According to an embodiment, FIG. 2 illustrates an example in which the electronic device 101 is a wearable electronic device in the form of glasses (e.g., a glasses-type display device or an augmented reality (AR) glass), but is not limited thereto. For example, the electronic device 101 may be an electronic device that includes a display and is worn (or device) on a portion of a user's body (e.g., a face or head) to provide augmented reality (AR), mixed reality (MR), and/or virtual reality (VR) services, and may be, for example, implemented in the form of at least one of glasses, goggles, a helmet, or a hat, but is not limited thereto. The electronic device 101 described hereinafter may be a device that includes at least one of the constituent elements included in the electronic device 101 as previously described with reference to FIG. 1. It may be interpreted that the electronic device 101 (or wearable electronic device 101) disclosed in the present document may include various constituent elements, as described with reference to FIG. 1, even if not mentioned in the following description.

According to an embodiment, the electronic device 101 may be worn on a user's face to provide the user with an image (e.g., an augmented reality image, mixed reality image, or virtual reality image). According to an embodiment, the electronic device 101 may provide an augmented reality service that overlays virtual information (or a virtual object) on at least a portion of a real world space (or environment). For example, the electronic device 101 may provide virtual information to a user by overlapping the virtual information on a real world space corresponding to a wearer's field of view (FOV).

With reference to FIG. 2, the electronic device 101 may include a glass member (or window member) 210 disposed in positions corresponding to a user's both eyes (e.g., a left eye and a right eye), a main frame (or main body portion) 240 that fixes the glass member 210, a support frame (or support member) 250 connected at both ends of the main frame 240 and mounted on the user's ear, and a camera 280 (e.g., a photographing camera).

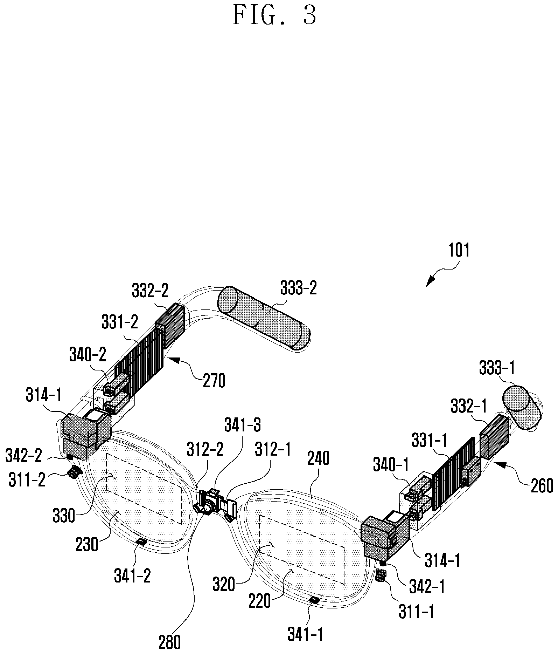

According to an embodiment, the glass member (or window member) 210 may include a first glass 220 corresponding to the user's left eye and a second glass 230 corresponding to the user's right eye. According to an embodiment, the glass member 210 may be supported by the main frame 240. For example, the glass member 210 may fit into an opening formed in the main frame 240. According to an embodiment, an AR image emitted from a display module (e.g., the display module 160 in FIG. 1) may be projected onto the glass member 210. According to an embodiment, the glass member 210 may have a waveguide (e.g., the waveguide in FIG. 3) formed in at least some areas thereof. In an embodiment, the waveguide serves to guide the AR image emitted from the display module to the user's eyes, and the detailed description of the waveguide will be described with reference to the description associated with the first glass 220 and second glass 230 in FIG. 3. According to an embodiment, as illustrated in FIG. 2, the glass member 210 is exemplified to be implemented in the form of the first glass 220 and the second glass 230 being separated to correspond to the user's left and right eyes, respectively, but according to some embodiments, the glass member 210 may be implemented in the form of a single glass without the separation of the first glass 220 and the second glass 230.

According to an embodiment, the main frame 240 and the support frame 250 may be implemented in the form of glasses.

According to an embodiment, the main frame 240 may be a structure that is at least partially mounted on the user's nose. According to an embodiment, the main frame 240 may support the glass member 210. According to an embodiment, the main frame 240 may be formed of a synthetic resin material. According to an embodiment, the glass member 210 fits into an opening formed in the main frame 240 so that the main frame 240 may support the glass member 210.

According to an embodiment, the support frame 250 may include a first support frame 260 mounted on an ear in a first direction (e.g., a left ear) and a second support frame 270 mounted on an ear in a second direction (e.g., a right ear). For example, the main frame 240 and the support frame 250 (e.g., a first support frame 260 and a second support frame 270) may be connected by means of a hinge portion (not illustrated) and may be coupled to be foldable.

According to an embodiment, the support frame 250 may be rotatably connected to the main frame 240. According to an embodiment, the support frame 250 may include the first support frame 260 and the second support frame 270. For example, the first support frame 260 may be connected to the main frame 240 from a left side (e.g., the first direction) with respect to the main frame 240 when viewed from an 'A' direction, and the second support frame 270 may be connected to the main frame 240 from a right side (e.g., the second direction) with respect to the main frame 240 when viewed from the 'A' direction. In an embodiment, the support frame 250 may be fixedly installed to the main frame 240. For example, the first support frame 260 connected to the left side of the main frame 240 and the second support frame 270 connected to the right side of the main frame 240 may be formed to be connected to each other. According to an embodiment, the support frame 250 connected to both sides of the main frame 240 may be formed in the shape of a ring and worn on the user's head. In addition, the support frame 250 may be modified into various shapes that allow the electronic device 101 to be worn on the user's face.

According to an embodiment, as illustrated in FIG. 2, the support frame 250 may be formed to be hung on the user's ear. According to an embodiment, the electronic device 101 may be worn on the user's face in a manner that the support frame 250 connected to the main frame 240 is hung on the user's ear. According to an embodiment, the support frame 250 may be rotatable relative to the main frame 240. According to an embodiment, the support frame 250 may be rotated in a direction proximate to the main frame 240 to reduce a volume of the electronic device 101.

According to an embodiment, a display module (not illustrated) (e.g., the display module 160 in FIG. 1) may output an AR image generated by a processor (not illustrated) (e.g., the processor 120 in FIG. 1). When an AR image is generated by the display module and projected onto the glass member 210, an AR may be implemented by combining an object included in the AR image with visible light L incident from a forward direction (e.g., a direction in which the user faces) through the glass member 210.

According to an embodiment, the display module may be a projector that is very small in size (e.g., a micro projector and a pico projector). For example, the display module may be a laser scanning display (LSD), a digital micro-mirror display (DMD), and/or a liquid crystal on silicon (LCoS). According to an embodiment, the display module may be a transparent display. In this case, a light emitting element included in the display module may be disposed directly on the glass member 210. In addition, the display module may be a variety of display devices for the implementation of the AR.

In an embodiment, the glass member 210, the support frame 250, and/or the display module (e.g., the display module 160 in FIG. 1) may be provided in pairs to correspond to the left and right eyes of the user. For example, the glass member 210 may include the first glass 220 and the second glass 230, and the support frame 250 may include the first support frame 260 and the second support frame 270. According to some embodiments, at least some of the aforementioned constituent elements may differ between a constitution corresponding to the left eye and a constitution corresponding to the right eye.

According to an embodiment, the camera 280 may represent, for example, a photographing camera. For example, the camera 280 may be implemented by disposing the camera 280 on the main frame 240 to photograph a subject on the front of the electronic device 101 (or the front as viewed by the user). For example, the camera 280 may be disposed at a center portion (or center point) between the first glass 220 and the second glass 230 in the main frame 240 to photograph the front of the main frame 240.

In an embodiment, the front of the main frame 240 may mean a direction in which the user faces when the user is wearing the electronic device 101. In an embodiment, the electronic device 101 may include a plurality of other cameras, including the camera 280, and the detailed description of the camera 280 and the plurality of other cameras is described with reference to FIG. 3.

FIG. 3 is a view illustrating an example of an internal constitution of the electronic device according to various embodiments.

According to an embodiment, the electronic device 101 may be a device implemented in the form of being worn on the user's face or head. According to an embodiment, the electronic device 101 may include a plurality of glasses (e.g., the first glass 220 and the second glass 230) corresponding to each of the user's both eyes (e.g., the left eye and the right eye), and may be implemented in the form of glasses. According to an embodiment, the electronic device 101 may provide the user with an image associated with an augmented reality service. According to an embodiment, the electronic device 101 may overlap at least one virtual object with the reality that the user perceives through the first glass 220 and/or the second glass 230 of the electronic device 101 by projecting or displaying the virtual object on the first glass 220 and/or the second glass 230.

With reference to FIG. 3, the electronic device 101 according to an embodiment may include the main frame (or main body portion) 240, a support frame (e.g., the first support frame 260 and the second support frame 270), and a hinge portion (e.g., the first hinge portion 340-1 and the second hinge portion 340-2).

According to an embodiment, the main frame 240 and the support frame (e.g., the first support frame 260 and/or the second support frame 270) may mount various constituent elements of the electronic device 101. According to an embodiment, the main frame 240 and the support frame 260 or 270 may be operatively connected by means of the hinge portion 340-1 or 340-2.

According to an embodiment, the main frame 240 may include a portion formed to rest at least partially on the user's nose.

According to an embodiment, the support frame 260 or 270 may include support members that may be shaped to be hung on the user's ear. According to an embodiment, the support frame 260 or 270 may include the first support frame 260 resting on the user's left ear and the second support frame 270 resting on the user's right ear.

According to an embodiment, the first hinge portion 340-1 may connect the first support frame 260 to the main frame 240 such that the first support frame 260 is rotatable relative to the main frame 240. According to an embodiment, the second hinge portion 340-2 may connect the second support frame 270 to the main frame 240 such that the second support frame 270 is rotatable relative to the main frame 240. According to other embodiments, the hinge portion 340-1 or 340-2 of the electronic device 101 may be omitted. For example, the support frame 260 or 270 may be directly connected to the main frame 240 and fixedly installed.

According to an embodiment, the main frame 240 may include: a glass corresponding to the user's both eyes (e.g., the left eye and the right eye) (e.g., the first glass 220 and the second glass 230); a display module (e.g., the display module 160 in FIG. 1) (e.g., a first display module 314-1 and a second display module 314-2); a waveguide (e.g., a first waveguide 320 and a second waveguide 330); at least one camera (e.g., the photographing camera 280 (or a forward photographing camera), a perception camera (e.g., a first perception camera 311-1 and a second perception camera 311-2)); an eye-tracking camera (e.g., a first eye-tracking camera 312-1 and a second eye-tracking camera 312-2); at least one microphone (e.g., a first microphone 341-1 and a second microphone 341-2 and a third microphone 341-3); and at least one lighting member (e.g., a first lighting member 342-1 and a second lighting member 342-2).

According to an embodiment, the electronic device 101 may display information by projecting light generated from the display module 314-1 or 314-2 onto the glass 220 or 230. For example, the light generated by the first display module 314-1 may be projected onto the first glass 220, and the light generated by the second display module 314-2 may be projected onto the second glass 230. According to an embodiment, the first glass 220 and the second glass 230 may be at least partially formed of a transparent material (e.g., a transparent member). According to an embodiment, the first glass 220 (or a first transparent member) corresponding to the user's left eye may be connected to the first display module 314-1, and the second glass 230 (or a second transparent member) corresponding to the user's right eye may be connected to the second display module 314-2. According to an embodiment, the first glass 220 and the second glass 230 may be formed of a glass plate, a plastic plate, and/or a polymer, and may be manufactured to be transparent or translucent.

According to an embodiment, the electronic device 101 may project light that is capable of displaying a virtual object onto the glass 220 or 230 formed of a transparent material, and the user may perceive the reality in which the virtual object overlaps based on the light projected onto the glass 220 or 230. In this case, the display module 160 described in FIG. 1 may be understood to include at least a portion of the display module 314-1 or 314-2 and the glass 220 or 230 in the electronic device 101 illustrated in FIG. 3. However, the electronic device 101 described in the present disclosure is not limited to displaying information in the manner described above.

According to another embodiment, the display module 314-1 or 314-2 that may be included in the electronic device 101 may be changed to a display module that includes methods of displaying information in various ways. For example, in case that display panel including a light emitting element of transparent material is embedded in the glass 220 or 230 itself, the electronic device 101 may display information without a separate display module (e.g., the first display module 314-1 and the second display module 314-2). In this case, the display module 160, as described in the description with reference to FIG. 1, may mean the glass 220 or 230 and the display panel included in the glass 220 or 230.

According to an embodiment, the display module (e.g., the first display module 314-1 and the second display module 314-2) may include a liquid crystal display (LCD) device, a digital micro-mirror display (DMD) device, a liquid crystal on silicon (LCoS) display device, an organic light emitting diode (OLED), or a micro light emitting diode (micro LED). Although not illustrated, in case that the display module (e.g., 314-1 and 314-2) is constituted as one of a liquid crystal display device, a digital micro-mirror display device, or a liquid crystal on silicon display device, the electronic device 101 may include a light source to illuminate light onto a screen output area of the display module (e.g., 314-1 and 314-2).

According to another embodiment, in case that the display module (e.g., 314-1 and 314-2) is capable of generating light on its own, for example, in case that the display module (e.g., 314-1 and 314-2) is constituted as one of an organic light emitting diode or a micro LED, the electronic device 101 may provide the user with a virtual image even if the electronic device 101 does not include a separate light source. In some embodiments, in case that the display module (e.g., 314-1 and 314-2) is implemented as an organic light emitting diode or a micro LED, a light source is not required, thereby allowing the electronic device 101 to be reduced in weight.

According to an embodiment, the first glass 220 and the second glass 230 may include a condensing lens and/or a waveguide (or transparent waveguide) (e.g., the first waveguide 320 and the second waveguide 330). According to an embodiment, the waveguide 320 or 330 may be positioned at least partially on a portion of the glass 220 or 230. For example, the first waveguide 320 may be partially positioned in the first glass 220, and the second waveguide 330 may be partially positioned in the second glass 230.

According to an embodiment, the waveguide 320 or 330 may serve to transmit a light source generated from the display module 314-1 or 314-2 to the user's eyes. According to an embodiment, the light emitted from the display module 314-1 or 314-2 may be incident on one surface (or one end) of the glass 220 or 230. The light incident on one surface of the glass 220 or 230 may be transmitted to the user through the waveguide 320 or 330 formed (or positioned) within the glass 220 or 230.

In an embodiment, the waveguide 320 or 330 may be made of a glass, a plastic, or a polymer, and may include a nanopattern formed on one surface of an interior or exterior thereof. For example, the nanopattern may include a grating structure with a polygonal or curved shape. According to an embodiment, the light incident on one surface of the glass 220 or 230 may be propagated or reflected within the waveguide 320 or 330 by the nanopatterns and transmitted to the user.

According to the embodiment, the waveguide 320 or 330 may include at least one of at least one diffractive element (e.g., a diffractive optical element (DOE) or a holographic optical element (HOE)) or a reflective element (e.g., a reflective mirror). According to an embodiment, the waveguide 320 or 330 may guide the light emitted from the display module 314-1 or 314-2 (e.g., a light source portion) to the user's eyes using at least one of a diffraction element or a reflection element.

According to an embodiment, the diffraction element may include an input optical member/output optical member (not illustrated). The input optical member may mean an input grating area. The output optical member may mean an output grating area. The input grating area may serve as an input terminal that diffracts (or reflects) light output from (e.g., micro LEDs) to transmit the light to the glass (e.g., the first glass 220 and the second glass 230). The output grating area may serve as an exit that diffracts (or reflects) the light transmitted to the glass (e.g., the first glass 220 and the second glass 230) of the waveguide 320 or 330 to the user's eyes.

In an embodiment, the reflection element may include a total internal reflection optical element or a total internal reflection waveguide for total internal reflection (TIR). The total internal reflection is one of the methods of guiding light, and may mean that an incident angle is created such that the light (e.g., a virtual image) input through the input grating area is reflected approximately 100 % from one surface (e.g., a specified surface) of the waveguide 320 or 330, and thus the light is transmitted approximately 100 % to the output grating area.

According to an embodiment, the light emitted from the display module (e.g., 314-1 and 314-2) may be guided by means of the input optical member to guide an optical path to the waveguide 320 or 330. The light traveling inside the waveguide 320 or 330 may be guided in a direction toward the user's eyes by means of the output optical member.

According to an embodiment, the display module 314-1 or 314-2 may include a plurality of panels (or display areas), and the plurality of panels may be positioned on the glass 220 or 230. According to an embodiment, at least a portion of the display module 314-1 or 314-2 may be constituted as a transparent element, and the user may view through the display module 314-1 or 314-2 to perceive a real space behind a rear surface of the display module 314-1 or 314-2.

According to an embodiment, the display module 314-1 or 314-2 may display a virtual object on at least some area of the transparent element such that it appears to the user that the virtual object has been added to at least some portion of the real space. According to an embodiment, in case that the display module 314-1 or 314-2 is a transparent micro LED, the constitution of the waveguide 320 or 330 within the glass 220 or 230 may be omitted.

According to an embodiment, the electronic device 101 may include a plurality of cameras (e.g., a first camera, a second camera, and a third camera). For example, the first camera may be the photographing camera 280 (e.g., an RGB camera) for photographing an image corresponding to the user's field of view (FoV) and/or measuring a distance to an object. The second camera may be the eye-tracking camera module 312-1 or 312-2 for identifying a direction of the user's gaze. The third camera may be the perception camera (gesture camera module) 311-1 or 311-2 for perceiving a predetermined space.

According to an embodiment, the photographing camera 280 may photograph a forward direction of the electronic device 101, and the eye-tracking camera 312-1 or 312-2 may photograph a direction opposite to the direction in which the photographing camera 280 photographs. For example, the first eye-tracking camera 312-1 may partially photograph the user's left eye, and the second eye-tracking camera 312-2 may partially photograph the user's right eye.

According to an embodiment, the electronic device 101 may display a virtual object related to the augmented reality service together based on image information related to the real space acquired through the photographing camera 280. According to an embodiment, the electronic device 101 may display a virtual object based on the display modules disposed corresponding to the user's both eyes (e.g., the first display module 314-1 corresponding to the left eye and/or the second display module 314-2 corresponding to the right eye). According to an embodiment, the electronic device 101 may display a virtual object based on configuration information (e.g., a resolution, a frame rate, a brightness, and/or a display area) that is pre-configured.

According to an embodiment, the photographing camera 280 may include a high-resolution camera, such as a high resolution (HR) camera and/or a photo video (PV) camera. For example, the photographing camera 280 may be used to acquire a high-quality image, such as with an autofocus function and image stabilization (OIS). The photographing camera 280 may be implemented as a global shutter (GS) camera and a rolling shutter (RS) camera in addition to a color camera.

According to an embodiment, the eye-tracking camera 312-1 or 312-2 may detect a direction of a user's gaze (e.g., an eye movement). For example, the eye-tracking camera 312-1 or 312-2 may detect the user's pupil and track the direction of gaze. In an embodiment, the tracked direction of gaze may be used to move a center of a virtual image including a virtual object in response to the direction of gaze. For example, the eye-tracking camera 312-1 or 312-2 may use the global shutter (GS) camera to detect the pupil and track fast eye movements without screen dragging, and each eye-tracking camera 312-1 or 312-2 may have substantially the same performance and specifications.

According to an embodiment, the perception camera 311-1 or 311-2 may detect the user's gesture and/or a predetermined space within a pre-configured distance (e.g., a predetermined space). According to an embodiment, the perception camera 311-1 or 311-2 may be used for head tracking, hand detection, and/or hand tracking in 3DoF and 6DoF. For example, the perception camera 311-1 or 311-2 may be used to perform a simultaneous localization and mapping (SLAM) function with spatial perception and depth photography for 6DoF.

According to some embodiments, the perception camera 311-1 or 311-2 may be used for a user's gesture recognition function. The perception camera 311-1 or 311-2 may include a camera that includes a GS. For example, the perception camera 311-1 or 311-2 may include a camera with the GS having less screen drag (or reduced RS phenomenon), such as the rolling shutter (RS) camera, to detect and track fast hand gestures and/or fine finger movements.

According to various embodiments, the electronic device 101 may detect an eye corresponding to a dominant eye and/or a non-dominant eye of the user's left eye and/or right eye, using at least one camera 311-1, 311-2, 312-1, 312-2, or 280. For example, the electronic device 101 may detect an eye corresponding to the dominant eye and/or the non-dominant eye based on the user's direction of gaze for an external object or a virtual object.

The number and position of at least one camera (e.g., the photographing camera 280, the eye-tracking camera 312-1 or 312-2 and/or the perception camera 311-1 or 311-2) included in the electronic device 101 illustrated in FIG. 3 may not be limited. For example, the number and position of at least one camera (e.g., the photographing camera 280, the eye-tracking camera 312-1 or 312-2, and/or the perception camera 311-1 or 311-2) may vary based on the form (e.g., shape or size) of the electronic device 101.

According to various embodiments, the electronic device 101 may include at least one lighting member (or a light-emitting device (illumination LED)) (e.g., the first lighting member 342-1 and the second lighting member 342-2) to increase the accuracy of at least one camera (e.g., the photographing camera 280, the eye-tracking camera 312-1 or 312-2, and/or the perception camera 311-1 or 311-2). For example, the first lighting member 342-1 may be disposed in a portion corresponding to the user's left eye, and the second lighting member 342-2 may be disposed in a portion corresponding to the user's right eye.

According to an embodiment, the lighting members 342-1 and 342-2 may be used for different purposes, respectively, depending on positions at which the lighting members are attached to the electronic device 101. In an embodiment, the lighting member 342-1 or 342-2 may be used as an auxiliary means to increase accuracy (e.g., to facilitate eye gaze detection) when photographing the user's pupil with the eye-tracking camera 312-1 or 312-2, and may include an IR LED that produces light of an infrared wavelength. In an embodiment, the lighting member 342-1 or 342-2 may be used as an auxiliary means to supplement ambient brightness when the user's gestures are photographed by the perception camera 311-1 or 311-2, when it is not easy to detect a subject to be photographed due to a dark environment or mixed and reflected light from multiple light sources.

According to an embodiment, the electronic device 101 may include a microphone (e.g., the first microphone 341-1, the second microphone 341-2, and the third microphone 341-3) for receiving a user's voice and ambient sounds. For example, the microphone 341-1, 341-2, or 341-3 may be a constituent element included in the audio module 170 in FIG. 1.

According to an embodiment, the first support frame 260 (or a first housing) and/or the second support frame 270 (or a second housing) may include a printed circuit board (PCB) (e.g., a first printed circuit board 331-1 and a second printed circuit board 331-2), a speaker for outputting an audio signal (e.g., a first speaker 332-1 and a second speaker 332-2), a battery (e.g., a first battery 333-1 and a second battery 333-2), and/or a hinge portion (e.g., the first hinge portion 340-1 and the second hinge portion 340-2).

According to an embodiment, the printed circuit board 331-1 or 331-2 may include a flexible substrate (e.g., an FPCB and a flexible PCB). The printed circuit board 331-1 or 331-2 may transmit an electrical signal to each constituent element of the electronic device 101 (e.g., a camera, a display module, a microphone, and/or a speaker).

According to the embodiment, the speaker 332-1 and 332-2 may include the first speaker 332-1 for transmitting an audio signal to the user's left ear and the second speaker 332-2 for transmitting an audio signal to the user's right ear. According to an embodiment, the speaker 332-1 or 332-2 may be a constituent element included in the audio module 170 in FIG. 1.

According to an embodiment, the battery 333-1 or 333-2 may provide power to the printed circuit board 331-1 or 331-2 through a power management module (e.g., the power management module 188 in FIG. 1). According to an embodiment, the electronic device 101 may have a plurality of batteries 333-1 and 333-2, by means of the first support frame 260 and the second support frame 270, and may provide power to the printed circuit boards 331-1 and 331-2, by means of the power management module (e.g., the power management module 188 in FIG. 1). For example, the plurality of batteries 333-1 and 333-2 may be electrically connected to the power management module (e.g., the power management module 188 in FIG. 1).

In the above description, the electronic device 101 is described as being a device that displays the augmented reality, but the electronic device 101 may be a device that displays the virtual reality. In this case, the glasses 220 and 230 may be formed of an opaque material so that the user cannot perceive the real space through the glasses 220 and 230. In addition, the glasses 220 and 230 may function as the display module 160. For example, the glass 220 or 230 may include a display panel that displays information.

According to an embodiment, although not illustrated, the electronic device 101 (e.g., a wearable electronic device), as illustrated in FIGS. 2 and 3, may be housed by another specified external device (e.g., a case) (not illustrated). According to an embodiment, the case may include a function to simply store and charge the electronic device 101.

According to some embodiments, in addition to being used for charging and storing the electronic device 101, the case may include constituent elements, such as a camera and/or processor, which may be used as an auxiliary calculating device for the electronic device 101. For example, the electronic device 101 may communicate (e.g., wired communication and/or wireless communication) with the case when stored in the case, and the case may perform some of the functions of a host device (e.g., a smartphone).

According to an embodiment, the electronic device 101 may provide an AR service, either alone or in conjunction with at least one other electronic device (e.g., a host device). For example, the electronic device 101 may operate as a tethered AR system method that is connected to the host device (e.g., a smartphone, a personal computer, and/or a tablet PC) and connects to a network (e.g., a cloud) through the host device to provide services. According to some embodiments, the electronic device 101 may also operate in a standalone manner that connects to a network (e.g., a cloud) without any connection to the host device to provide services.

According to an embodiment, as illustrated in FIGS. 2 and 3, the electronic device 101 may be in the form in which the first support frame 260 (or the first housing) and the second support frame 270 (or the second housing) are connected to one end and the other end of the main frame 240 (or a center housing), respectively, and the first support frame 260 and the second support frame 270 are spaced apart (or separated).

According to an embodiment, the electronic device 101 may include first constituent elements (or a first system or a main system) including at least one electronic component on the first support frame 260. For example, the first constituent elements may process an operation related to the user's left eye and an operation to supply a power source between the first constituent elements within the first support frame 260.

According to an embodiment, the electronic device 101 may include second constituent elements (or a second system or a sub system) that are at least partially the same as or similar to the first constituent elements in the second support frame 270. For example, the second constituent elements may include a constitution corresponding to the first constituent elements, and may process an operation related to the user's right eye and an operation to supply a power source between the second constituent elements within the second support frame 270.

According to an embodiment, the first support frame 260 (or the first housing) and the second support frame 270 (or the second housing) may be electrically connected to each other by means of the main frame 240 (or the center housing).

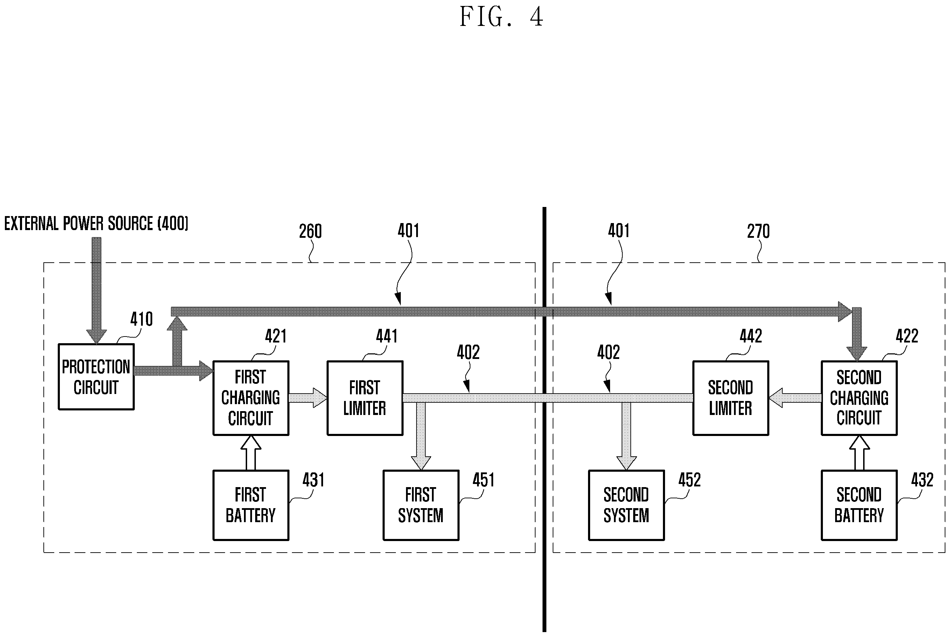

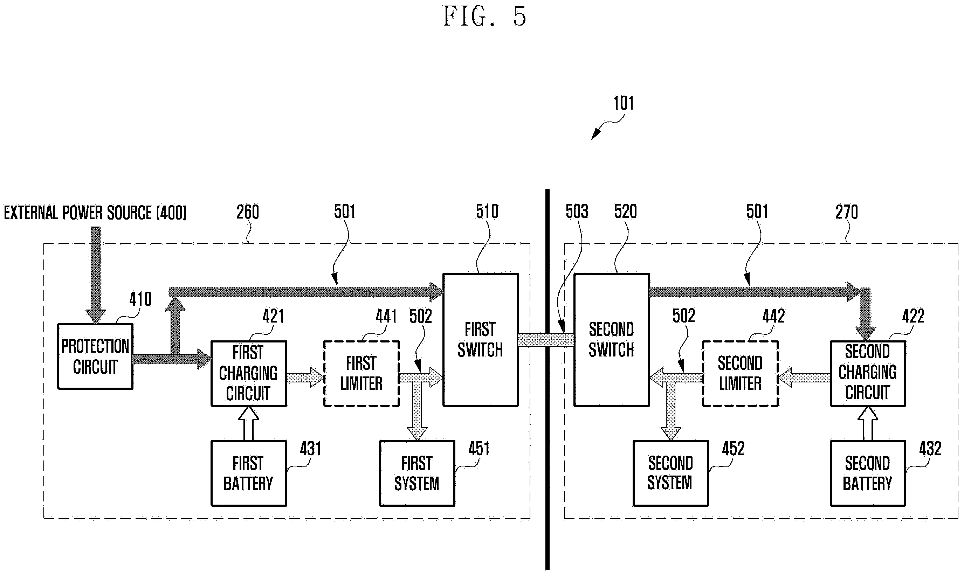

According to an embodiment, in the electronic device 101, a first power path (e.g., a VBUS path) for charging the first constituent elements of the first support frame 260 and the second constituent elements of the second support frame 270, which are constituted to correspond to the user's left and right eyes, respectively, from an external power source, and a second power path (e.g., a VBAT path) for connecting voltages between the first constituent elements and the second constituent elements and connecting voltages between constituent elements within each of the support frames 260 and 270, may be electrically connected to each other by means of the main frame 240. For example, the main frame 240 may be arranged with a power line for electrical connection between the first support frame 260 and the second support frame 270. Examples related to this are illustrated in FIGS. 4 and 5.

FIG. 4 is a view illustrating an example of a connection structure of a power path in the electronic device according to an embodiment. FIG. 5 is a view illustrating an example of a connection structure of a power path in the electronic device according to various embodiments.

According to an embodiment, FIG. 4 may illustrate an example of a connection structure of an existing way of power path in the electronic device 101. According to an embodiment, FIG. 5 may illustrate an example of a connection structure of a new way of power path according to the present disclosure in the electronic device 101 according to an embodiment of the present disclosure.

As illustrated in FIGS. 4 and 5, the electronic device 101 may include a constitution corresponding to the left eye and a constitution corresponding to the right eye, in the first support frame 260 and the second support frame 270, respectively. For example, the electronic device 101 may include a protection circuit 410 (e.g., an over voltage protection (OVP), an over current protection (OCP), and/or an over power protection (OPP)), a first charging circuit 421, a first battery 431, a first limiter 441, and a first system (or main system) 451 in the first support frame 260. For example, the electronic device 101 may include a second charging circuit 422, a second battery 432, a second limiter 442, and a second system (or sub system) 452 in the second support frame 270. According to some embodiments, at least some of the aforementioned constituent elements may differ between a constitution corresponding to the left eye and a constitution corresponding to the right eye.

According to an embodiment, the protection circuit 410 may protect against an overvoltage or an overpower to a source power source (e.g., a VBUS power source) input, for example, from an external device (e.g., a case or charger). For example, the protection circuit 410 may protect various circuits within the electronic device 101 from an overvoltage caused by a source power source. The protection circuit 410, according to an embodiment, may serve to provide a power source (e.g., a specified voltage) to the electronic device 101 from an external device (e.g., a case or charger) such that the power source supplied to the electronic device 101 may be stably used in the electronic device 101.

According to an embodiment, the charging circuit (e.g., the first charging circuit 421 and the second charging circuit 422) may charge the battery (e.g., the first battery 431 (e.g., the first battery 333-1 in FIG. 3), the second battery 432 (e.g., the second battery 333-2 in FIG. 3) of the electronic device 101 using power supplied by an external device to the electronic device 101. According to an embodiment, the charging circuits 421 and 422 may select a charging method (e.g., normal charging or fast charging) based on at least some of a type of external device (e.g., a power source adapter and USB charger), a magnitude of power that can be supplied from the external device, or properties of the battery, and charge the batteries 431 and 432 using the selected charging method. According to an embodiment, the charging circuits 421 and 422 may adjust and output the power from the external device or the batteries 431 and 432 to the constituent elements (or electronic components or systems) included in the electronic device 101 at a voltage or current level appropriate for each constituent element.

According to an embodiment, the batteries (e.g., first battery 431 and second battery 432) may each provide power to at least one constituent element of the electronic device 101 (e.g., the constituent element of the first system 451, the constituent element of the second system 452). According to an embodiment, the batteries 431 and 432 may include, for example, a primary cell which is not rechargeable, a secondary cell which is rechargeable, or a fuel cell.

According to an embodiment, the limiters (or clippers) (e.g., the first limiter 441 and the second limiter 442) may limit and output a signal voltage (or an input voltage) input from the charging circuits 421 and 422, respectively, within a configured range. According to an embodiment, the limiters 441 and 442 may include a diode circuit. For example, the limiters 441 and 442 may be circuits that cut off the signal voltage above and/or below a predetermined level (or a threshold). For example, the limiters 441 and 442 may be diode limiter circuits that limit or cut off a positive area and/or a negative area of the input voltage.

According to an embodiment, the limiters 441 and 442 in FIG. 5 may be omitted in accordance with the proposed structure of the present disclosure. According to an embodiment, the electronic device 101 may omit limiters (e.g., the first limiter 441 and the second limiter 442) for controlling (e.g., controlling current) a second power source (e.g., VBAT) of the first system 451 in the first support frame 260 and the second system 452 in the second support frame 270. For example, the electronic device 101 may use a single power path by sharing a first power source (e.g., VBUS) and a second power source (e.g., VBAT) during a charging operation and a discharging operation, rather than using each independent power path.

Therefore, the electronic device 101 may be systematically stable without control (e.g., current control) of the second power source (e.g., VBAT) of the first system 451 and the second system 452, and thus the limiters 441 and 442 may be omitted in the proposed structure of the present disclosure.

According to an embodiment, a system (e.g., the first system 451 and the second system 452) may mean various constituent elements of the electronic device 101. In an embodiment, the first system 451 may be used as a term to represent the constituent elements within the first support frame 260, as illustrated in FIG. 3. In an embodiment, the second system 452 may be used as the term to represent the constituent elements within the second support frame 270, as illustrated in FIG. 3. According to an embodiment, the systems 451 and 452 may include various constituent elements as described in the description with reference to FIGS. 1 and 3.

According to an embodiment, with reference to FIGS. 4 and 5, an existing way of a connection structure of a power path in electronic device 101 and a connection structure of a power path of the present disclosure are described.

As illustrated in FIG. 4, in the electronic device 101, the existing structure for connecting a power path between the first system 451 of the first support frame 260 and the second system 452 of the second support frame 270 via the main frame 240, may be a structure in which a first power source (e.g., VBUS) line 401 supplied from an external power source 400 (e.g., a power source of a case or charger) and a second power source (e.g., VBAT) line 402 supplied to the first system 451 and the second system 452 within the electronic device 101 are connected, respectively. For example, in the related art, a power line connection between the first support frame 260 and the second support frame 270 requires the first power source line 401 and the second power source line 402 to be connected through the main frame 240, respectively.

According to an embodiment, in case that the electronic device 101 is connected to the external device (e.g., a case or charger), the external power source 400 from the external device may supply charging current to the first charging circuit 421 and the second charging circuit 422 through the first power source (e.g., VBUS) line 401, respectively. According to an embodiment, the power source (e.g., the second power source (e.g., VBAT)) of the first battery 431 and the second battery 432 may be supplied to the first system 451 and the second system 452 through the second power source (e.g., VBAT) line 402 across the first charging circuit 421 and the second charging circuit 422, respectively. According to an embodiment, the first system 451 and the second system 452 may be connected by a single power source (e.g., the second power source (e.g., VBAT)). In this structure, there may be a difference in resistance (e.g., direct current (DC) resistance (DCR)) depending on a wiring length on both sides of the first power source line 401 and the second power source line 402. In addition, the electronic device 101 may have an increased thickness of the main frame 240 as the first power source line 401 and the second power source line 402 are each disposed through the main frame 240.

As illustrated in FIG. 5, in the electronic device 101, the structure of the present disclosure for connecting a power path between the first system 451 of the first support frame 260 and the second system 452 of the second support frame 270 via the main frame 240 may include a structure for connecting the power path between the first system 451 of the first support frame 260 and the second system 452 of the second support frame 270 into a single power path, as compared to the structure in FIG. 4. To this end, the electronic device 101 of the present disclosure may include switches (e.g., a first switch 510 and a second switch 520) for configuring a power path.

According to an embodiment, the switches may include the first switch 510 for changing a power path configuration in the first support frame 260 and the second switch 520 for changing a power path configuration in the second support frame 270.

For example, the electronic device 101 according to an embodiment of the present disclosure may be a structure in which the first power source (e.g., VBUS) line 501 supplied from the external power source 400 (e.g., a power source from a case or charger) and the second power source (e.g., VBTA) line 502 supplied to the first system 451 and the second system 452 within the electronic device 101 are each connected to a switch (e.g., the first switch 510 or the second switch) in respective corresponding support frames (e.g., the first support frame 260 and the second support frame 270), and a single power line 503 is connected between the switches (e.g., the first switch 510 and the second switch 520).

According to various embodiments, the switches (e.g., the first switch 510 and the second switch 520) in the electronic device 101 may be connected by the power line 503 (hereinafter referred to as the "switch power line 503 ") that forms a single power path. According to an embodiment, the electronic device 101 may change a configuration of the switches (e.g., the first switch 510 and the second switch 520) such that the switch power line 503 operates as the first power source (e.g., VBUS) line during the charging operation of the electronic device 101. According to an embodiment, the electronic device 101 may change a configuration of the switches (e.g., the first switch 510 and the second switch 520) such that the switch power line 503 operates as the second power source (e.g., VBAT) line during the non-charging operation of the electronic device 101.

According to an embodiment, the electronic device 101 may change the configuration of the switches 510 and 520 such that the switch power line 503 of the switches (e.g., the first switch 510 and the second switch 520) is connected to the first power source (e.g., VBUS) line 501 in case that the external device (e.g., a case or charger) is connected. According to an embodiment, the electronic device 101 may change the configuration of the switches 510 and 520 to allow the external power source 400 from the external device to transmit (or supply) charging current through the first power source (e.g., VBUS) line 501 to the first charging circuit 421 and the first switch 510, respectively. According to an embodiment, the electronic device 101 may transmit (or supply) the charging current transmitted to the first switch 510 to the second charging circuit 422 via the second switch 520 through the switch power line 503.

According to an embodiment, the electronic device 101 may change the configuration of the switches 510 and 520 such that the switch power line 503 of the switches (e.g., the first switch 510 and the second switch 520) is connected to the second power source (e.g., VBAT) line 502 in case that the connection of the external device (e.g., a case or charger) is removed, or there is no connection to the external device. According to an embodiment, the electronic device 101 may change the configuration of the switches 510 and 520 to allow the second power source (e.g., VBAT) from the first battery 431 and/or the second battery 432 to be shared to the first system 451 and/or the second system 452 via the first switch 510 and the second switch 520 through the second power source line 502.

As described in the present disclosure, simplifying the power line using the switch (e.g., the first switch 510 or the second switch 520) of each support frame (e.g., the first support frame 260 or the second support frame 270) may reduce the thickness of the FPCB connecting the first support frame 260 and the second support frame 270, and may lower the resistance (e.g., DCR) of the power line. An example related to this is shown in Table 1.

**[Table 1]**

| Division | Length | Width | Thickness | DCR |
|---|---|---|---|---|
| Existing | 220mm | 5mm | 0.1mm | 0.214ohm |
| Applying improvements | 200mm | 5 mm | 0.2mm | 0.107ohm |

According to an embodiment, with reference to FIG. 5 and <Table 1>, in case that the electronic device 101 is connected to the external device, a charging current may be supplied to the first charging circuit 421 and the second charging circuit 422 through the first power source line 501 and the switch power line 503, respectively. According to an embodiment, in case that the electronic device 101 is not connected to an external device, the power source of the first battery 431 and the second battery 432 is supplied to a system power source (e.g., VBAT or VSYS) via a respective charging circuit (e.g., the first charging circuit 421 and the second charging circuit 422) through the second power source line 502 and the switch power line 503, and the first system 451 and the second system 452 may be connected to a single power source corresponding to the second power source (e.g., VBAT (VSYS)).

According to an embodiment, a main power line connecting the first system 451 of the first support frame 260 and the second system 452 of the second support frame 270 may require two power lines of the first power source (e.g., VBUS) line 501 and the second power source (VBAT (VSYS)) line 502. This conventional structure may have a DCR of approximately 0.214 ohms, for example, as illustrated in Table 1, and may have a high DCR during both charging and discharging operations. In contrast, in the structure as described in the present disclosure, in which only a single power line (e.g., the switch power line 503) is used, the wiring length of the entire power line may be reduced and the DCR may be reduced by approximately half (e.g., approximately 0.107 ohms), as illustrated in Table 1.

As illustrated in FIG. 5, in the power line simplification structure according to an embodiment of the present disclosure, an operation of changing the configuration of switches (e.g., the first switch 510 and the second switch 520) to control the power path will be described with reference to the following drawings.

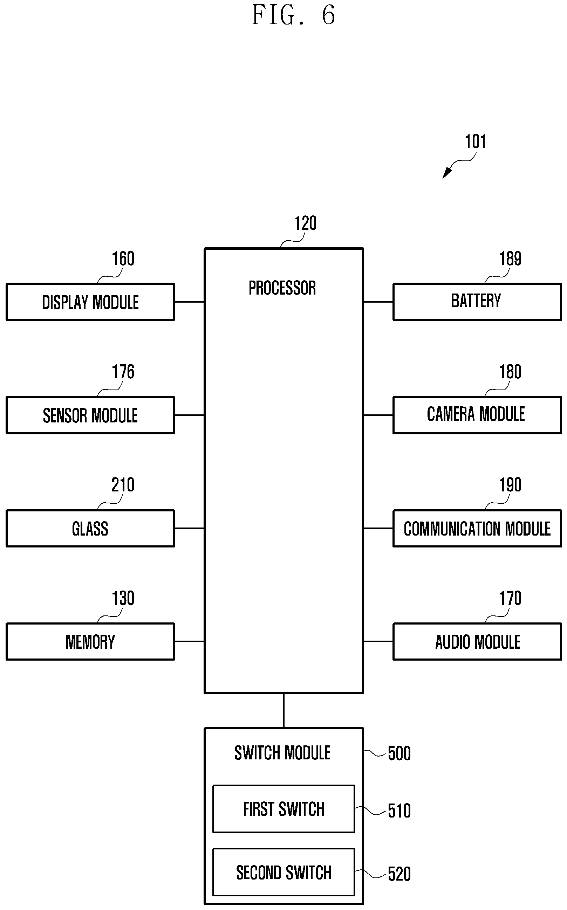

FIG. 6 is a view schematically illustrating a constitution of the electronic device according to various embodiments.

According to an embodiment, FIG. 6 may illustrate an example of a constitution associated with a control to change the power line between the switches (e.g., the first switch 510 and the second switch 520) in the electronic device 101 according to various embodiments, to a power path of the first power source (e.g., the first power source line 501), or to a power path of the second power source (e.g., the second power source line 502). According to an embodiment, the electronic device 101 illustrated in FIG. 6 may include all or at least some of the components of the electronic device 101 as described in the description with reference to FIGS. 1 to 5. According to an embodiment, in FIG. 6, the electronic device 101 may represent an AR device (e.g., AR glasses or smart glasses).

With reference to FIG. 6, the electronic device 101 may include a processor 120, a display module 160, a sensor module 176, a glass 210, a battery 189, a camera module 180, a communication module 190, a memory 130, an audio module 170, and a switch module 500.

According to an embodiment, the glass 210 (e.g., the first glass 220 and/or the second glass 230 in FIGS. 2 and 3) may include a condensing lens and/or a transparent waveguide (e.g., the first waveguide 320 and the second waveguide 330 in FIG. 3). For example, the transparent waveguide may be positioned at least partially on a portion of the glass 210. According to an embodiment, light emitted from the display module 160 may be incident through one end of the glass 210 and the incident light may be transmitted to a user through the waveguide formed in the glass 210. The waveguide may be made of glass or polymer, and may include a nanopattern formed on one surface inside or outside the waveguide, for example, a polygonal or curved grating structure.

According to an embodiment, the display module 160 may include a plurality of panels (or display areas), and the plurality of panels may be positioned on the glass 210. According to an embodiment, at least a portion of the display module 160 may be constituted of a transparent element, and the user may penetrate through the display module 160 to perceive a real space behind the rear surface of the display module 160. According to an embodiment, the display module 160 may display a virtual object on at least a partial area of the transparent element so that the user sees that the virtual object is added to at least a part of the real space. According to an embodiment, in case that the display module 160 is a transparent uLED, the constitution of the waveguide within the glass 210 may be omitted.

According to an embodiment, the sensor module 176 may include a proximity sensor, an illuminance sensor, and/or a gyro sensor.

According to an embodiment, the proximity sensor may detect an object adjacent to the electronic device 101.

According to an embodiment, the illuminance sensor may measure the degree of brightness around the electronic device 101. According to an embodiment, the processor 120 may confirm the brightness level around the electronic device 101 using the illuminance sensor, and change brightness-related configuration information of the display module 160 based on the brightness level. For example, when the ambient brightness is brighter than a configured brightness, the processor 120 may configure the brightness level of the display module 160 higher so as to increase the user's visibility.

According to an embodiment, the gyro sensor may detect a posture and position of the electronic device 101. For example, the gyro sensor may detect whether the electronic device 101 is properly worn on the user's head. For another example, the gyro sensor may detect a motion of the electronic device 101 or a motion of the user wearing the electronic device 101.

According to an embodiment, the communication module 190 may correspond to the wireless communication module 192 as illustrated in FIG. 1. According to an embodiment, the electronic device 101 may perform communication with the external device (e.g., the server 201 in FIG. 1 and/or other electronic devices 102 and 104) through a network using the communication module 190. According to an embodiment, the communication module 190 may include an antenna module 197. For example, the communication module 190 may support various technologies (e.g., beamforming) for securing performance in a specified frequency band, multiple input/output (MIMO), and/or an array antenna.

According to an embodiment, the antenna module 197 may transmit or receive a signal or power to or from the outside (e.g., a peripheral device and/or server of the electronic device 101). According to an embodiment, the antenna module 197 may include a plurality of antennas (e.g., an array antenna). According to an embodiment, the signal or power may be transmitted or received between the communication module 190 and the outside world through the antenna module 197.

According to an embodiment, the memory 130 may correspond to the memory 130 as described in the description with reference to FIG. 1. According to an embodiment, the memory 130 may store various data used by the electronic device 101 when the electronic device 101 provides the AR service. The data may include, for example, input data or output data for software (e.g., the program 140), and commands related thereto.

According to an embodiment, the memory 130 may store instructions that, when executed, cause the processor 120 to operate. For example, the instructions may be stored in memory 130 as software (e.g., the program 140 in FIG. 1) and executable by the processor 120.

According to an embodiment, the audio module 170 may convert sound into an electrical signal or conversely convert an electrical signal into sound based on the control of the processor 120.

According to an embodiment, the camera module 180 may correspond to the camera module 180 as described in the description with reference to FIGS. 1 and 3. According to an embodiment, as illustrated in FIG. 3, the camera module 180 may include a plurality of cameras (e.g., the photographing camera 280, the perception cameras 311-1 and 311-2, and the eye-tracking cameras 312-1 and 312-2 in FIG. 3).

According to an embodiment, the battery 189 may supply power to at least one constituent element of the electronic device 101 (e.g., the constituent element of the first system 451 and the constituent element of the second system 452 in FIG. 5). According to an embodiment, the battery 189 may include a plurality of batteries as described in the description with reference to FIG. 3. For example, the battery 189 may include the first battery 431 that supplies power to the first system 451 in the first support frame 260 and the second battery 432 that supplies power to the second system 452 in the second support frame 270.

According to an embodiment, the switch module 500 may include the first switch 510 and the second switch 520. According to an embodiment, the first switch 510 is connected to a power path for the first power source (e.g., VBUS) applied from the external device (e.g., case or charger) and the second power source (e.g., VBAT) supplied from the first battery 431 of the first system 451, and under the control of the processor 120 based on a specified condition (or an operational state) of the electronic device 101, the first switch 510 may connect either one power source (e.g., VBUS or VBAT) of the first power source or the second power source to the second switch 520 through the power path. According to an embodiment, the first switch 510 may be a switch of double pole single through (DPST) structure.

According to an embodiment, the second switch 520 may be connected to the first switch 510 through a single power path and, under the control of the processor 120 based on a specified condition (or an operational state) of the electronic device 101, the second switch 520 may connect the first power source or the second power source to the second charging circuit 422 or the second system 452 through the power path. According to an embodiment, the second switch 520 may be a switch of single pole double through (SPDT) structure.

According to an embodiment, the switch module 500 may include the first switch 510 for changing a power path configuration in the first support frame 260 and the second switch 520 for changing a power path configuration in the second support frame 270. The electronic device 101 according to an embodiment of the present disclosure may be a structure in which the first power source (e.g., VBUS) line 501 supplied from the external power source 400 (e.g., a power source from a case or charger) and the second power source (e.g., VBTA) line 502 supplied to the first system 451 and the second system 452 within the electronic device 101 are each connected to a switch (e.g., the first switch 510 or the second switch) in respective corresponding support frames (e.g., the first support frame 260 and the second support frame 270), and a single power line 503 is connected between the switches (e.g., the first switch 510 and the second switch 520).

According to an embodiment, the processor 120 may form (or connect) or release (or block) a power path for supplying a power source using the switch module 500 (e.g., the first switch 510 and the second switch 520). For example, the processor 120 may change an on/off (or close/open) configuration of the first switch 510 and the second switch 520 for selective connection of the first power source (e.g., VBUS) line 501 and the second power source (e.g., VBAT) line 502 between the first switch 510 and the second switch 520 based on an operational state of the electronic device 101 (e.g., charged state or non-charged state), as shown in the example in Table 2 below. According to an embodiment, the first switch 510 may be a switch of double pole single through (DPST) structure. According to an embodiment, the second switch 520 may be a switch of single pole double through (SPDT) structure.

**[Table 2]**

| State | First power source | Second power | First switch | Second switch |
|---|---|---|---|---|
| | path | source path | | |
| Charged | Enable | Disable | First power source (VBUS) line connected | First power source (VBUS) line connected |
| Non-charged | Disable | Enable | Second power source (VBAT) line connected | Second power source (VBAT) line connected |

According to an embodiment, the electronic device 101 may connect the first power source line 501 for the first power source (e.g., VBUS) of the external device 400 (e.g., a case or charger) and the second power source line 502 for the second power source (e.g., VBAT) of the first battery 451 to an input of the first switch 510, and connect the switch power line 503 between the first switch 510 and the second switch 520 to an output of the first switch 510. According to an embodiment, the electronic device 101 may connect the switch power line 503 to the input of the second switch 520, and connect the first power source line 501 for the first power source (e.g., VBUS) transmitted through the second switch 520 and the second power source line 502 for the second power source (e.g., VBAT) of the first battery 451 or the second battery 452 to the output of the second switch 520.

According to an embodiment, the processor 120 may control switching of the switch module 500 to connect any one of the first power source (e.g., VBUS) or the second power source (e.g., VBAT) to the second switch 520 by changing the configuration of the first switch 510 and the second switch 520 based on the state of the electronic device 101, and the processor 120 may control switching of the switch module 500 to connect a power line (e.g., the first power source line 501 or the second power source line 502) connected from the first system 451 to a power line (e.g., the first power source line 501 or the second power source line 502) of the second system 452 through the second switch 520. According to an embodiment, the processor 120 may control the first switch 510 and the second switch 520 simultaneously by generating a control signal to each of the first switch 510 and the second switch 520.

According to an embodiment, the processor 120 may change the configuration of the switch modules 500 (e.g., the first switch 510 and the second switch 520) such that, under a first specified condition (e.g., a charged condition) of the electronic device 101, the power path between the first system 451 of the first support frame 260 and the second system 452 of the second support frame 270 is connected to the first power source (e.g., the external power source 400 in FIG. 5, for example, a charger power source (VBUS)).

According to an embodiment, the processor 120 may change the configuration of the switch modules 500 (e.g., the first switch 510 and the second switch 520) such that, under a second specified condition (e.g., a non-charged condition) of the electronic device 101, the power path between the first system 451 of the first support frame 260 and the second system 452 of the second support frame 270 is connected to the second power source (e.g., a battery power source (VBAT)). For example, the processor 120 may process an operation associated with controlling the configuration of the first switch 510 and the second switch 520 to change a single power path connected to the first power source (VBUS) and the second power source (VBAT) based on a specified condition.

According to an embodiment, the processor 120 may correspond to the processor 120 as described in the description with reference to FIG. 1. According to an embodiment, the processor 120, for example, may execute an application (e.g., an AR application), thus to control the peripheral device connected to the electronic device 101 through the data communication link on the AR and to perform various data processing or calculations related to the AR service. According to an embodiment, as at least part of the data processing or calculations, the processor 120 may store the data received through the communication module 190 in the memory 130, process the data stored in the memory 130, and store and/or transmit resulting data to the peripheral device.

According to an embodiment, the processor 120 may control the display module 160 to display one image (e.g., AR screen) by overlapping various digital contents (e.g., AR images) on the real world provided through the display module 160.

According to an embodiment, the processor 120 may include at least one processor in any one of the first system (e.g., the first system 451 in FIG. 4 or 5) of the first support frame 260 of the electronic device 101 or the second system (e.g., the second system 452 in FIG. 4 or 5) of the second support frame 270. According to some embodiments, the processor 120 may include a first processor (e.g., a main processor) and a second processor (e.g., an auxiliary processor) in the first system of the first support frame 260 and the second system of the second support frame 270, respectively, of the electronic device 101, and may include a dual system structure that operates in synchronization with the first processor and the second processor.

An electronic device 101 according to various embodiments of the present disclosure includes, a first support frame 260 including a first system (or a main system) 451, a second support frame 270 including a second system (or a sub system) 452, a switch module 500 for changing a configuration of a power path between the first system 451 and the second system 452, and a processor 120 provided in the first system 451 and/or the second system 452 and operatively connected to the switch module 500, in which the processor 120 may be configured to change a configuration of the switch module 500 so that the power path between the first system 451 and the second system 452 is connected to a power path of a first power source (VBUS), under a first specified condition of the electronic device 101, and change the configuration of the switch module 500 so that the power path between the first system 451 and the second system 452 is connected to a power path of a second power source (VBAT) under a second specified condition of the electronic device 101.

According to various embodiments of the present disclosure, the processor 120 may be configured to monitor, while the electronic device 101 is in operation, whether the electronic device 101 is in a charged state or a non-charged state, and to judge, based on a result of the monitoring, the first specified condition or the second specified condition.

According to various embodiments of the present disclosure, the processor 120 may be configured to change the configuration of the switch module 500 such that the power lines of the first switch 510 and the second switch 520 of the switch module 500 are connected to a first power path of the first power source in case of detection of the first specified condition.

According to various embodiments of the present disclosure, the processor 120 may be configured to change the configuration of the switch module 500 such that a power line of a first switch 510 and a second switch 520 of the switch module 500 is connected to a second power path of the second power source in case of detection of the second specified condition.

According to various embodiments of the present disclosure, the processor 120 may be configured to control the connection of the power path based on the battery level of a battery 432 of the second system 452, under the first specified condition.

According to various embodiments of the present disclosure, the processor 120 may be configured to identify the battery level of the battery 432 under the first specified condition and, judge whether a third specified condition is detected based on the battery level of the battery 432.

According to various embodiments of the present disclosure, the processor 120 may be configured to judge the third specified condition, in case that the battery level of the battery 432 is equal to or greater than a reference level, and maintain the power line of the first switch 510 and the second switch 520 of the switch module 500 in the second power path of the second power source, based on the third specified condition.

According to various embodiments of the present disclosure, the processor 120 may be configured such that the first switch 510 and the second switch 520 are not connected to the first power source line, but are connected to the second power source line to use the second power source, under the third specified condition, in case that the battery level of the battery 432 is equal to or greater than the reference level.

According to various embodiments of the present disclosure, the processor 120 may be configured to charge a first battery 431 of the first system 451 based on the first power source and not charge a second battery 432 of the second system 452 under the third specified condition.

According to various embodiments of the present disclosure, the processor 120 may be configured such that, upon operation under the first specified condition or the second specified condition, a single power path is used to be shared by the first power source and the second power source, based on control of the switch module 500.

A wearable electronic device 101, according to various embodiments of the present disclosure, includes a first housing 260 including a first system (or a main system) 451, a second housing 270 constituted to be spaced apart from the first housing 260, and including a second system (or a sub system) 452, a power path between the first system 451 and the second system 452, a first switch 510 and a second switch 520 configured to change a configuration of the power path between the first system 451 and the second system 452, and a processor 120, in which the processor 120 may be configured to control the configuration of the first switch 510 and the second switch 520 to change the power path for a first power source (VBUS) or a second power source (VBAT) based on a specified condition, in which the first switch 510 may be configured to be connected to a power path for the first power source (VBUS) applied from an external device and/or the second power source (VBAT) supplied from a first battery 431 of the first system 451, and in which the first switch 510 configured to connect either one power source of the first power source or the second power source to the second switch 520 through the power path based on the specified condition, in which the second switch 520 is configured to be connected to the first switch 510 through the power path, and to connect the first power source or the second power source to the second system 452 through the power path based on the specified condition.

According to various embodiments of the present disclosure, the first switch 510 may include a double pole single through (DPST) switch, and the second switch 520 may include a single pole double through (SPDT) switch.

According to various embodiments of the present disclosure, the wearable electronic device 101 may constitute a single power line for connection of the first power source or the second power source, between the first switch 510 and the second switch 520, based on switching of the first switch 510 and the second switch 520.

According to various embodiments of the present disclosure, the processor 120 may be included in the first system 451 and/or the second system 452.

Hereinafter, an operating method of the electronic device 101 according to various embodiments will be described in detail. Operations performed by the electronic device 101 described below may be executed by the processor (e.g., the processor 120 in FIG. 1 or FIG. 6) including at least one processing circuitry of the electronic device 101. According to an embodiment, operations performed by the electronic device 101 may be executed by instructions that are stored in the memory 130 and allow the processor 120 to be operated when executed.

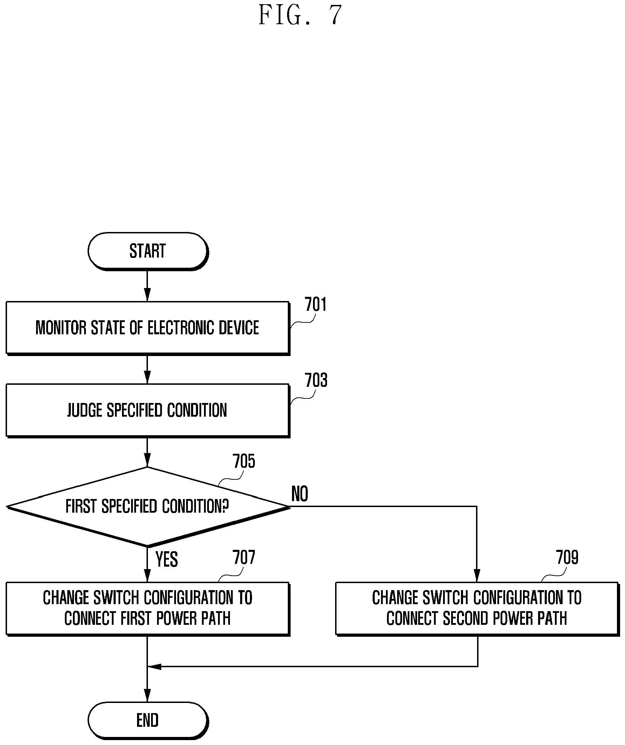

FIG. 7 is a flowchart illustrating a method of operating the electronic device according to various embodiments.

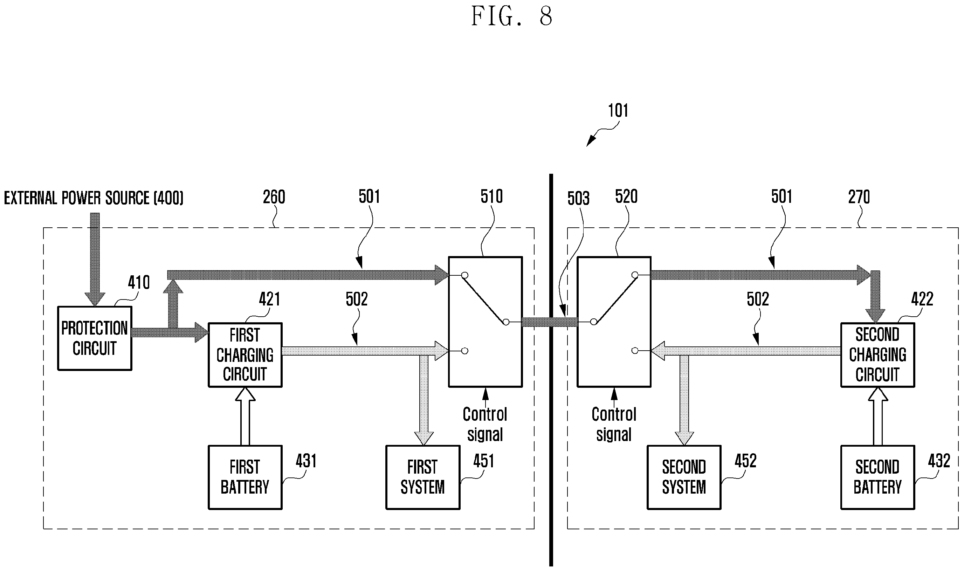

FIG. 8 may illustrate an example of switching to connect a power path to a single power line (e.g., the first power source (VBUS) line) in the electronic device, according to various embodiments.

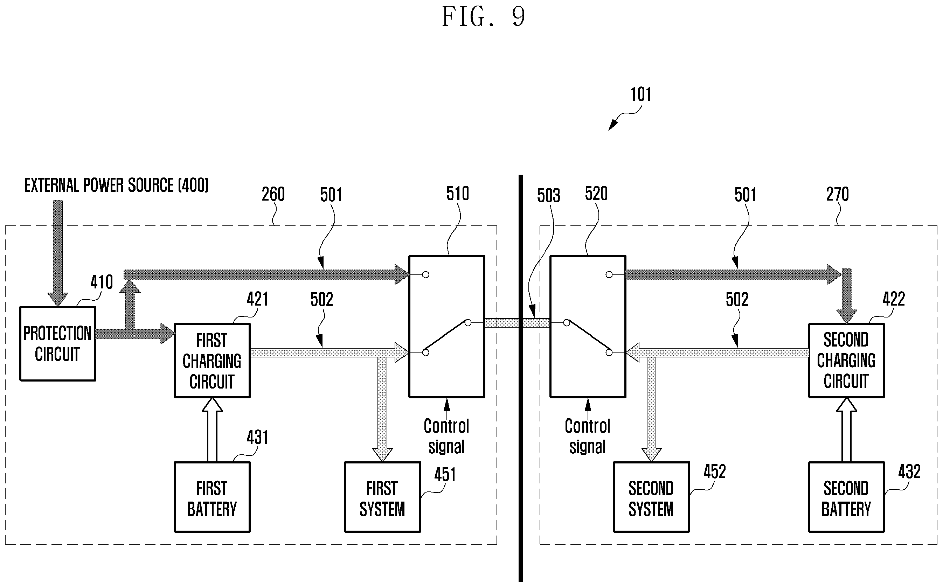

FIG. 9 may illustrate an example of switching to connect a power path to a single power line (e.g., the second power source (VBAT) line) in the electronic device, according to various embodiments.

With reference to FIG. 7, at operation 701, the processor 120 of the electronic device 101 may monitor an operational state of the electronic device 101. According to an embodiment, the processor 120 may monitor whether the electronic device 101 is in a charged state or a non-charged state while the electronic device 101 is in operation.

According to an embodiment, the charged state may include a state in which an external power source is supplied to the electronic device 101 based on a connection to an external device (e.g., a case or charger). According to an embodiment, the non-charged state may include a state in which no external device (e.g., case or charger) is connected, or a non-charged state in which an external device (e.g., a case or charger) is connected and an external power source is blocked from being applied to the electronic device 101 based on a full charge. According to some embodiments, the processor 120 may include an operation to monitor the battery level of the battery (e.g., the first battery 431 and/or the second battery 432).

At operation 703, the processor 120 may judge a specified condition based on a result of monitoring. According to an embodiment, the specified condition may include a first specified condition based on a charged state of the electronic device 101 and a second specified condition based on a non-charged state of the electronic device 101.

At operation 705, the processor 120 may judge whether the electronic device 101 is in operation under the first specified condition or the second specified condition, based on a result of the judgment.

At operation 705, in case that the processor 120 judges that the specified condition is the first specified condition (e.g., "yes" at operation 705), at operation 707, the processor 120 may change a configuration of the switches (e.g., the first switch 510 and the second switch 520) to connect the first power path. An example related to this is illustrated in FIG. 8.

According to an embodiment, with reference to FIG. 8, in case that the external device (e.g., a case or charger) is connected to the electronic device 101, the external power source 400 is applied to the electronic device 101, and the electronic device 101 satisfies the first specified condition (e.g., a charged state), the processor 120 may control the power line 503 between the first switch 510 (e.g., a DPST switch) and the second switch 520 (e.g., an SPDT switch) to be connected to the power path of the first power source (e.g., VBUS). According to an embodiment, the external power source 400 is supplied to the first charging circuit 421 as the first power source (e.g., VBUS), and the first charging circuit 421 may perform a charging operation.

According to an embodiment, the processor 120 may generate a control signal to the first switch 510 and the second switch 520 such that the first switch 510 and the second switch 520 are connected to the first power source (e.g., VBUS) line 501 based on the detection of the first specified condition. According to an embodiment, the first switch 510 and the second switch 520 may be changed in configuration by the control signal from the processor 120. Accordingly, the external power source 400 supplied by the external device may be connected to the first charging circuit 421 and the second charging circuit 422, and the charging operation may be performed by the first charging circuit 421 and the second charging circuit 422. According to an embodiment, the first system 451 of the first support frame 260 and the second system 452 of the second support frame 270 may be operated based on the second power source (e.g., VBAT) of the respective independent batteries (e.g., the first battery 431 and the second battery 432).

At operation 705, in case that the processor 120 judges that the specified condition is the second specified condition (e.g., "no" at operation 705), at operation 709, the processor 120 may change the configuration of the switches (e.g., the first switch 510 and the second switch 520) to connect the second power path. An example related to this is illustrated in FIG. 9.

According to an embodiment, with reference to FIG. 9, in case that the external device (e.g., a case or charger) is not connected to the electronic device 101, or the electronic device 101 satisfies the second specified condition (e.g., a non-charged state) according to the full charge state of the electronic device 101, the processor 120 may control the power line 503 between the first switch 510 and the second switch 520 to be connected to the power path of the second power source (e.g., VBAT).

According to an embodiment, the processor 120 may generate a control signal to the first switch 510 and the second switch 520 such that the first switch 510 and the second switch 520 are connected to the second power source (e.g., VBAT) line 502 based on the detection of the second specified condition. According to an embodiment, the first switch 510 and the second switch 520 may be changed in configuration by the control signal from the processor 120. For example, the first switch 510 and the second switch 520 may be changed in configuration to connect the first system 451 of the first support frame 260 and the second system 452 of the second support frame 270 to the second power source (e.g., VBAT). Accordingly, the first system 451 of the first support frame 260 and the second system 452 of the second support frame 270 may be connected to the second power source (e.g., VBAT).

In this case, according to an embodiment, even though there is a difference between a voltage (or battery level) of the first battery 431 and a voltage (or battery level) of the second battery 432, the battery level of the first battery 431 and the battery level of the second battery 432 may be balanced through the connection of the second power source line 502. For example, in case that the power line 503 between the first switch 510 and the second switch 520 is connected to the power path of the second power source (e.g., VBAT), the electronic device 101 may maintain balancing of the second power source by supplying a voltage from the higher-voltage battery to the lower-voltage battery of either the first battery 431 or the second battery 432 .

According to various embodiments, the processor 120 may control the power path based on the battery level of the second battery 432 for the second system 452 when controlling the switches 510 and 520 with an external device (e.g., a case or charger) connected (e.g., a charged state), as illustrated in Table 3 below.

**[Table 3]**

| Battery Level | First switch | Second switch |
|---|---|---|
| Approximately 0 % to approximately 90 % | First power source (VBUS) line connected | First power source (VBUS) line connected |
| Approximately 91 % to approximately 100 % | Second power source (VBAT) line connected | Second power source (VBAT) line connected |

According to an embodiment, in case that the battery level of the second battery 432 is equal to or greater than a reference level (e.g., approximately 91 %), the first switch 510 and the second switch 520 may not be connected to the first power source (e.g., VBUS) line, but may be connected to the second power source line to use the second power source (e.g., VBAT). For example, the electronic device 101 may not charge the second battery 432 in case that the second battery 432 has sufficient capacity, and may only proceed to charge the first battery 431.

According to an embodiment, as illustrated in FIGS. 8 and 9, the electronic device 101 may omit limiters (e.g., the first limiter 441 and the second limiters 442 in FIG. 5) for controlling (e.g., controlling current) a second power source (e.g., VBAT) of the first system 451 in the first support frame 260 and the second system 452 in the second support frame 270. For example, the electronic device 101 may use a single power path by sharing a first power source (e.g., VBUS) and a second power source (e.g., VBAT) during a charging operation and a discharging operation, rather than using each independent power path.

Therefore, the electronic device 101 may be systematically stable without control (e.g., current control) of the second power source (e.g., VBAT) of the first system 451 and the second system 452, and thus the limiters 441 and 442 may be omitted in the present disclosure. Therefore, the electronic device 101 can secure a mounting space for other constituent elements by excluding the two limiters 441 and 442, and has an effect of reducing the product cost of the electronic device 101.

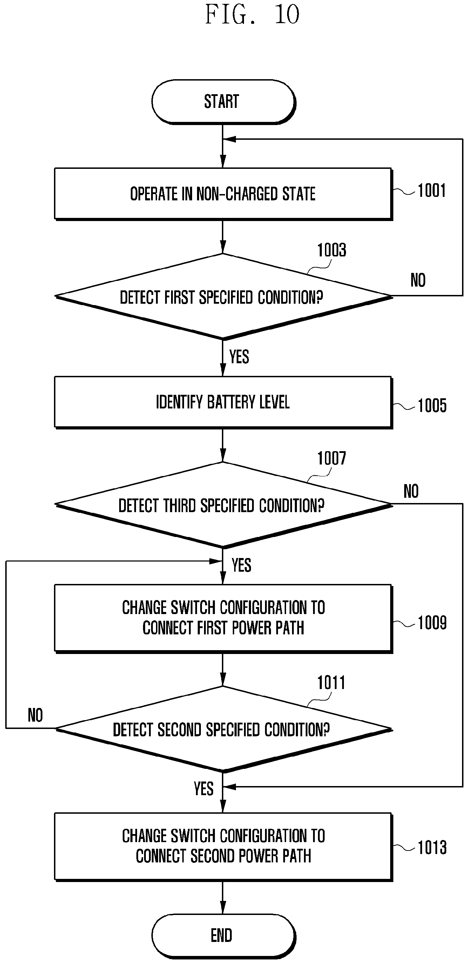

FIG. 10 is a flowchart illustrating a method of operating the electronic device according to various embodiments.

With reference to FIG. 10, at operation 1001, the processor 120 of the electronic device 101 may be in a state in which the electronic device 101 is performing an operation in a non-charged state (e.g., the first specified condition). According to an embodiment, the processor 120 may be in a state in which the processor 120 is operating in a non-charged state, with the switch module 500 (e.g., the first switch 510 and the second switch 520) configured to connect the power path to the second power source (e.g., VBAT) line. According to an embodiment, the protection circuit 410 may be in a disabled state in the non-charged state, and the external power source 400 (e.g., VBUS) may be in a disconnected state.

At operation 1003, the processor 120 may judge whether the first specified condition is detected. According to an embodiment, the processor 120 may judge the first specified condition based on whether the first power source (e.g., VBUS) is applied by the connection of the external device (e.g., a case or charger) through the protection circuit 410.

At operation 1003, in case that the first specified condition is not detected (e.g., "no" at operation 1003), the processor 120 may proceed to operation 1001 and perform operations subsequent to operation 1001.

At operation 1003, in case that the first specified condition is detected (e.g., "yes" at operation 1003), the processor 120 may, at operation 1005, identify the battery level of the battery (e.g., the second battery 432 of the second support frame 270). For example, the processor 120 may identify the current charge capacity of the second battery 432.

At operation 1007, the processor 120 may judge whether the third specified condition is detected based on the battery level of the second battery 432. According to an embodiment, the processor 120 may judge the third specified condition based on whether the battery level of the second battery 432 is equal to or greater than a reference level (e.g., approximately 91 %).

At operation 1007, in case that the third specified condition is detected (e.g., "yes" at operation 1007), at operation 1013, the processor 120 may change (e.g., maintain) the configuration of the switch module 500 (e.g., the first switch 510 and the second switch 520) to connect the second power path. According to an embodiment, when the external device is connected and the first power source (e.g., VBUS) is applied, the processor 120 may not connect the first switch 510 and the second switch 520 to the first power source (e.g., VBUS) line, but may connect the first switch 510 and the second switch 520 to the second power source line to use the second power source (e.g., VBAT) in case that the battery level of the second battery 432 is equal to or greater than a reference level. For example, the processor 120 may not charge the second battery 432 in case that the second battery 432 has sufficient capacity, and may only proceed to charge the first battery 431.

At operation 1007, in case that the third specified condition is not detected (e.g., "no" at operation 1007), at operation 1009, the processor 120 may change the configuration of the switch module 500 (e.g., the first switch 510 and the second switch 520) to connect the first power path. According to an embodiment, the processor 120 may enable the protection circuit 410 based on the detection of the first specified condition, and may control such that the power line 503 between the first switch 510 and the second switch 520 is connected to the power path of the first power source (e.g., VBUS), as described in the description with reference to FIG. 8.

At operation 1011, the processor 120 may judge whether the second specified condition is detected. According to an embodiment, the processor 120 may judge the second specified condition in case that the processor 120 recognizes that the connection to the external device is released, or a full state of charge of the first battery 431 and the second battery 432.

At operation 1011, in case that the second specified condition is not detected (e.g., "no" at operation 1011), the processor 120 may proceed to operation 1009 and perform operations subsequent to operation 1009. For example, the processor 120 may maintain the configuration of the switch module 500 (e.g., the first switch 510 and the second switch 520) configured to connect the first power path.

At operation 1011, in case that the second specified condition is detected (e.g., "yes" at operation 1011), at operation 1013, the processor 120 may change the configuration of the switch module 500 (e.g., the first switch 510 and the second switch 520) to connect the second power path. According to an embodiment, the processor 120 may disable the protection circuit 410 based on the detection of the second specified condition, and may control such that the power line 503 between the first switch 510 and the second switch 520 is connected to the power path of the second power source (e.g., VBAT), as described in the description with reference to FIG. 9.

A method of performing an operation in an electronic device 101 according to various embodiments of the present disclosure, may include monitoring a specified condition of the electronic device 101, changing a configuration of a switch module 500 such that a power path between a first system 451 and a second system 452 is connected to a power path of a first power source (VBUS) under a first specified condition of the electronic device 101, and changing the configuration of the switch module 500 so that the power path between the first system 451 and the second system 452 is connected to a power path of a second power source (VBAT) under a second specified condition of the electronic device 101.

According to various embodiments of the present disclosure, the monitoring may include monitoring whether the electronic device 101 is in a charged state or a non-charged state while the electronic device 101 is in operation, and judging, based on a result of the monitoring, the first specified condition or the second specified condition.

According to various embodiments of the present disclosure, the changing of the configuration of the switch module 500 may include changing, upon detecting the first specified condition, the configuration of the switch module 500 such that the power line of the first switch 510 and the second switch 520 of the switch module 500 is connected to the first power path of the first power source, and changing, upon detecting the second specified condition, the configuration of the switch module 500 such that the power line of the first switch 510 and the second switch 520 of the switch module 500 is connected to the second power path of the second power source.

According to various embodiments of the present disclosure, the changing of the configuration of the switch module 500 may include identifying, under the first specified condition, a battery level of a battery, and judging, based on the battery level of the battery, whether a third specified condition is detected.

According to various embodiments of the present disclosure, the changing of the configuration of the switch module 500 may include judging the third specified condition in case that the battery level of the battery is equal to or greater than a reference level, and, maintaining the power line of the first switch and the second switch of the switch module in the second power path of the second power source based on the third specified condition.

According to various embodiments of the present disclosure, the changing of the configuration of the switch module 500 may include controlling the switch module such that, under the third specified condition, a first battery of the first system is charged based on the first power source in case that the battery level of the battery is equal to or greater than a reference level, and a second battery of the second system is not charged.

The various embodiments disclosed in the present specification and drawings are provided as examples merely for easily explaining the technical contents and helping understand the present disclosure, but not intended to limit the scope of the technology disclosed in the present disclosure. Therefore, the scope of the present disclosure should be interpreted that all changes or modified forms derived based on the technical spirit of the present disclosure fall within the scope of the present disclosure in addition to the embodiments disclosed herein.

## Claims

1. An electronic device comprising:
a first support frame including a first system;
a second support frame including a second system;
a switch module configured to change a configuration of a power path between the first system and the second system; and
a processor provided in the first system and/or the second system and operatively connected to the switch module,
wherein the processor is configured to change the configuration of the switch module so that the power path between the first system and the second system is connected to a power path of a first power source (VBUS) under a first specified condition of the electronic device, and change the configuration of the switch module so that the power path between the first system and the second system is connected to a power path of a second power source (VBAT) under a second specified condition of the electronic device.

2. The electronic device of claim 1, wherein the processor is configured to monitor, while the electronic device is in operation, whether the electronic device is in a charged state or a non-charged state, and to judge, based on a result of the monitoring, the first specified condition or the second specified condition.

3. The electronic device of claim 2, wherein the processor is configured to, upon detecting the first specified condition, change the configuration of the switch module such that a power line of the first switch and the second switch of the switch module is connected to a first power path of the first power source.

4. The electronic device of claim 2, wherein the processor is configured to, upon detecting the second specified condition, change the configuration of the switch module such that a power line of the first switch and the second switch of the switch module is connected to a second power path of the second power source.

5. The electronic device of claim 2, wherein the processor is configured to control the connection of the power path based on a battery level of a battery of the second system under the first specified condition.

6. The electronic device of claim 5, wherein the processor is configured to identify the battery level of the battery under the first specified condition, and to judge whether a third specified condition is detected based on the battery level of the battery.

7. The electronic device of claim 6, wherein the processor is configured to judge the third specified condition in case that the battery level of the battery is equal to or greater than a reference level, and maintain the power line of the first switch and the second switch of the switch module in the second power path of the second power source based on said third specified condition.

8. The electronic device of claim 7, wherein the processor is configured such that the first switch and the second switch are not connected to the first power source line, but are connected to a second power source line to use the second power source, under the third specified condition, in case that the battery level of the battery is equal to or greater than the reference level.

9. The electronic device of claim 8, wherein the processor is configured to charge a first battery of the first system based on the first power source, and not to charge a second battery of the second system, under the third specified condition.

10. The electronic device of claim 2, wherein the processor is configured such that, upon operation under the first specified condition or the second specified condition, a single power path is used to be shared by the first power source and the second power source, based on control of the switch module.

11. The electronic device of claim 1, wherein the switch module comprises a first switch and a second switch configured to change the configuration of the power path between the first system and the second system,
wherein the processor is configured to control a configuration of the first switch and the second switch to change a power path for the first power source (VBUS) or the second power source (VBAT) based on a specified condition,
wherein the first switch is configured to be connected to a power path for the first power source (VBUS) applied from an external device and/or the second power source (VBAT) supplied from a first battery of the first system,
wherein the first switch configured to connect either one power source of the first power source or the second power source to the second switch through the power path based on the specified condition, and
wherein the second switch is configured to be connected to the first switch through the power path, and to connect the first power source or the second power source to the second system through the power path based on the specified condition.

12. The electronic device of claim 11, wherein the first switch comprises a double pole single through (DPST) switch, and the second switch comprises a single pole double through (SPDT) switch.

13. The electronic device of claim 11, wherein the electronic device constitutes a single power line for connection of the first power source or the second power source, between the first switch and the second switch, based on switching of the first switch and the second switch.

14. The electronic device of claim 11, wherein the processor is included in the first system and/or the second system.

15. A method of operating an electronic device, the method comprising:
monitoring a specified condition of the electronic device;
changing a configuration of a switch module such that a power path between a first system and a second system is connected to a power path of a first power source (VBUS) under a first specified condition of the electronic device; and
changing the configuration of the switch module so that the power path between the first system and the second system is connected to a power path of a second power source (VBAT) under a second specified condition of the electronic device.
